(19) Europäisches Patentamt

European Patent Office

Office européen des brevets

(11) Veröffentlichungsnummer: **0 303 799 B1**

# (12) EUROPÄISCHE PATENTSCHRIFT

(45) Veröffentlichungstag der Patentschrift: **23.10.91**

(21) Anmeldenummer: **88109920.4**

(22) Anmeldetag: **22.06.88**

(51) Int. Cl.⁵: **F16F 15/22**, D21F 1/20

(54) Schüttelbock.

(30) Priorität: **20.08.87 DE 3727742**

(43) Veröffentlichungstag der Anmeldung:
**22.02.89 Patentblatt 89/08**

(45) Bekanntmachung des Hinweises auf die
Patenterteilung:
**23.10.91 Patentblatt 91/43**

(84) Benannte Vertragsstaaten:
**AT GB IT SE**

(56) Entgegenhaltungen:
DE-C- 593 034          FR-A- 2 136 303
FR-A- 2 207 250        GB-A- 702 270
GB-A- 2 120 697        US-A- 1 946 592
US-A- 4 538 481

**MACHINE DESIGN, Band 903, Nr. 31, 19. Februar 1959, Seite 136; "Scanning the field for ideas. 'Counterbalanced flywheels'"**

(73) Patentinhaber: **SULZER-ESCHER WYSS GMBH
Escher Wyss-Strasse 25 Postfach 1380
W-7980 Ravensburg(DE)**

(72) Erfinder: **Biondetti, Mario, Dipl.Masch.Ing.
Via Maraschin 59
I-36015 Schio (Vicenza)(IT)**

EP 0 303 799 B1

Rank Xerox (UK) Business Services

**Beschreibung**

Die Erfindung bezieht sich auf einen Schüttelbock der im Oberbegriff des Anspruchs 1 angegebenen Art.

So ein Schüttelbock wird zum Beispiel zum Schütteln von schweren Walzen einer Papiermaschine benutzt, um durch das Schütteln die Entwässerung und die Qualität der entstehenden Papierbahn zu erhöhen. Die Schüttelbewegung wird dabei in horizontaler Richtung ausgeführt. Dargestellt ist ein derartiger Schüttelbock, der die Schüttelbewegung mittels einer Kolbenstange auf den zu schüttelnden Teil der Papiermaschine überträgt, in der deutschen Patentschrift DE-C-593 034. Das Schütteln der großen Masse der Walzen in ihrer axialen, d.h. horizontalen Richtung verursacht bei dem ständigen hin- und hergehenden Beschleunigen und Bremsen der Masse entsprechend große Erschütterungen, die über die Konstruktion der Maschine von der Unterlage der Maschine aufgenommen werden müssen. Dies beeinträchtigt und belastet das ganze Gebäude, in dem die Maschine aufgestellt ist. Das ist auch der Grund, warum man häufig auf das Schütteln verzichten muß oder es nur in beschränktem Umfang anwendet, oder man muß das Gebäude massiver auslegen. Dies alles verursacht materielle Verluste.

Es sind zwar auch schon Schüttelvorrichtungen bekannt geworden, z.B. durch die französiche Patentschrift FR-A-2.136.303, bei denen eine Kompensation von zu nachteiligen Erschütterungen führenden Massenkräfte möglich ist, jedoch nur bei einem einzigen vorgegebenen Wert für den Schüttelhub. Das reicht in vielen Fällen nicht aus.

Die Literaturstelle MACHINE DESIGN: Band 903, Nr. 31, 1959, Seite 136, "Scanning the field for ideas 'counterbalanced flywheels'" zeigt zwar bereits eine Möglichkeit, mit Hilfe gegenläufiger Gewichte unerwünschte Vibrationen in einem Antriebssystem zu reduzieren, doch ist auch hier der Schüttelhub nicht einstellbar. Zudem können keine großen Schüttelkräfte übertragen werden.

Eine andere bekannte Schüttelvorrichtung zeigt die amerikanische Patentschrift US-A-1,946,592. Diese ist an der zu schüttelnden Papiermaschine direkt befestigt. Ihre erwünschte Wirkung wird durch Massenkräfte erreicht, wobei eine erschütternde Schwingungsbelastung des Fundamentes unter der Papiermaschine auftritt.

Aus dem Pressenbau sind Lösungen bekannt, mit denen sich gezielt gerichtete Massenkräfte durch gleichfrequent, teils gleichsinnig, teils gegensinnig umlaufende Unwuchten erzeugen lassen. Solche Kräfte können bei Pressen zu deren Funktion nutzbringend eingesetzt werden, übertragen sich aber naturgemäß auch auf die Maschinenunterlage. Verschiedenen Ausführungen solcher Pressen sind z.B. in der FR-A-2 207 250 dargestellt.

Es ist Aufgabe der Erfindung, einen Schüttelbock so zu gestalten, daß die beim Schütteln wirkenden Kräfte kompensiert werden, so daß sie nicht mehr beeinträchtigend auf die Maschine bzw. auf das Gebäude einwirken können, und zwar so, daß diese Kompensation bei allen gewünschten Einstellungen des Hubes erfolgt.

Diese Aufgabe ist in einem Schüttelbock der eingangs beschriebenen Art durch die im Kennzeichen des Anspruchs 1 angegebenen Maßnahmen erfindungsgemäß gelöst. Die vorgeschlagene Vorrichtung ist imstande, die beim Schütteln auftretenden Kräfte automatisch völlig zu kompensieren. Dabei wird durch die beschriebenen Maßnahmen auch eine Abstimmung auf das Maß des Hubweges vorgenommen.

Der Anspruch 2 beansprucht die Verwendung des erfindungsmäßigen Schüttelbocks in einer Papiermaschine.

Die übrigen Ansprüche beschreiben vorteilhafte Ausführungsmodifikationen der Erfindung.

Im folgenden wird der Erfindungsgegenstand anhand einer Zeichnung näher beschrieben und erklärt. Die Beschreibung bezieht sich auf die Zeichnung, in welcher zeigt:

Fig. 1 einen erfindungsmäßigen Schüttelbock in schematischer Darstellungsweise,

Fig. 2 einen Teil der Vorrichtung, gesehen in Richtung des Pfeiles von links in Fig. 1,

Fig. 3 eine zweite Ausführung der Vorrichtung,

Fig. 4 eine dritte Variante der Vorrichtung,

Fig. 5 eine Exzentervorrichtung zum Schütteln der Masse im Schnitt, gemäß Linie I-I in Fig. 4,

Fig. 6 schematisch einen Teil einer Papiermaschine mit einem erfindungsmäßigen Schüttelbock zum Schütteln von drei Walzen der Maschine,

Fig. 7 eine Form eines Gewichtes aus zwei Teilen.

Fig. 8 die Form in Fig. 7, gesehen in Richtung des Pfeiles zu Fig. 7.

Fig. 9 ein Differentialgetriebe zwischen zwei Wellen.

Ein Schüttelbock 1 dient zum Versetzen einer Masse 2 in Schwingungen von horizontaler Richtung. Er hat eine Vorrichtung 3 zum Kompensieren der bei den Schwingungen auftretenden, horizontal wirkenden Massenkräfte. Diese treten durch das Beschleunigen und Abbremsen der Masse 2 auf. Die Vorrichtung 3 weist mindestens ein Paar Gewichte 4 auf, die exzentrisch z.B. an Hebelarmen 5 angeordnet sind, in einem Gehäuse 6 gelagert und im zueinander entgegengesetzten Drehsinn drehbar sind. Das Rotieren der Gewichte 4 geschieht mit der Frequenz des Schüttelns, bzw. des Schwingens und ist mit den Bewegungen der Masse 2 so gekoppelt, daß in dem jeweiligen Zeitpunkt, wenn sich die Masse 2 an dem Wendepunkt ihrer Bewegung befindet, die Schwerpunkte der Gewichte 4 in entgegengesetzte horizontale Richtung zu der Richtung weisen, in der die zu kompensierenden Kräfte wirken. Die Länge der Hebelarme 5 und die Masse der Gewichte 4 sind so bemessen, daß die von ihnen beim Drehen ausgehende Fliehkraft die in die entgegengesetzte Richtung wirkende, horizontale Kraft völlig zu kompensieren vermag. Dazu steht die Vorrichtung 3 mit der Masse 2 in kraftschlüssiger Verbindung, die die Wirkung der Kräfte auf das die Vorrichtung 3 abstützende und umgekehrt auf die Masse 2 überträgt.

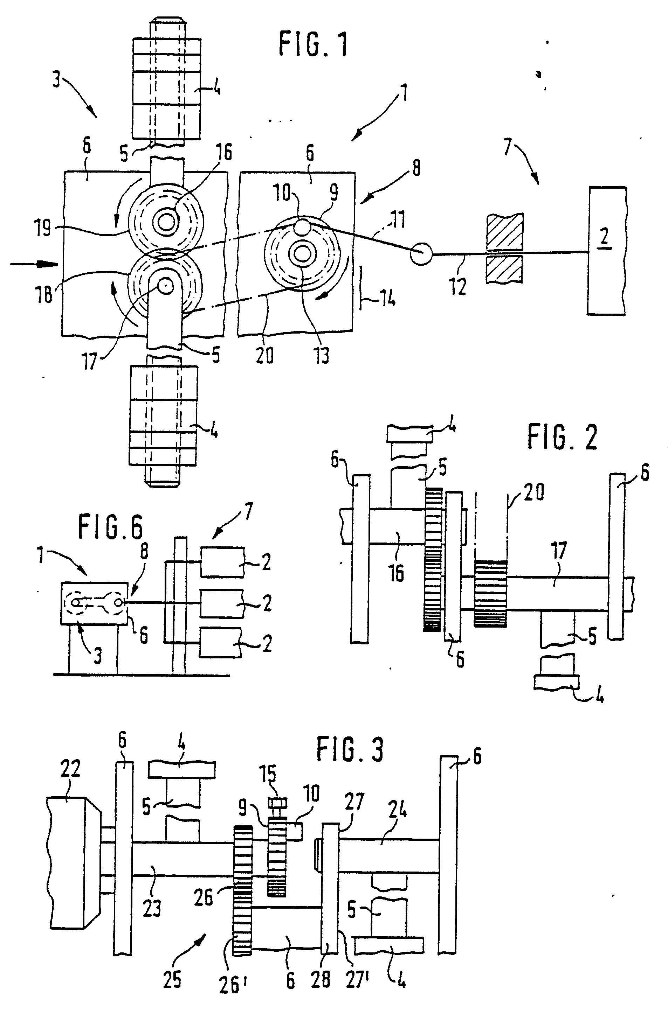

Mit Vorteil ist so ein Schüttelbock 1 an einer Papiermaschine 7 angeordnet, zum Erzeugen von horizontalen Schwingungen, in welche eine Walze, wie in Fig. 1 angedeutet, oder eine Anzahl von drei Walzen, wie z.B. in der Fig. 6 dargestellt, versetzt wird. Die Walzen sind als Masse jeweils mit 2 bezeichnet.

Das Schütteln an sich kann auch durch eine von der Vorrichtung 3 separierte Vorrichtung zum Schütteln der Masse bewerkstelligt werden. Es muß jeweils die kraftschlüssige Verbindung zwischen der Masse und der Vorrichtung 3 sichergestellt werden, und die Frequenz des Schüttelns und des Drehens der Gewichte muß die gleiche sein.

Nach den Ausführungen, die in den Figuren gezeigt sind, ist die Vorrichtung 8 zum Schütteln der Masse 2 auch im Gehäuse 6 gelagert und ist mit der Masse kraft- und formschlüssig verbunden. Diese Verbindung geht von einem exzentrisch an einem Rad 9 gelagerten Bolzen 10 über eine Pleuelstange 11 und Zugstange 12 zu der Masse 2. Damit ist ein Kurbelantrieb gegeben, wobei die Gerade zwischen der Mitte des Bolzens 10 und der Mitte einer Welle 13 des Rades 9 den rotierbaren Hebelarm 14 des Kurbelantriebs darstellt. Über diesen Kurbelantrieb ist die kraftschlüssige Verbindung zwischen der Masse 2 und dem Gehäuse 6 hergestellt.

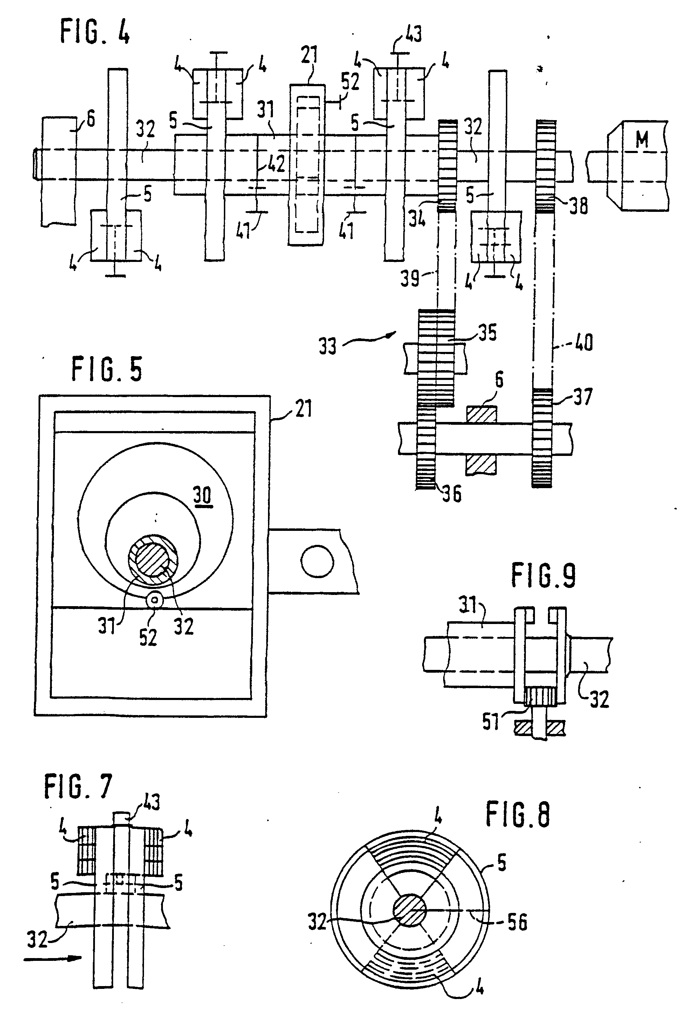

Diese Vorrichtung 8 zum Schütteln der Masse 2 kann aber auch z.B. einen Kulissenantrieb 21 mit einem Exzenter 30 haben, wie ein solcher in Fig. 5 gezeigt ist.

Der Hub der zu schüttelnden Masse ist veränderbar durch Einstellen der Exzentrizität des Bolzens 10 am Rad 9 mit einer Vorrichtung, die z.B. in Fig. 3 mit 15 bezeichnet ist. Auch die Position des Exzenters 30 im Kulissenantrieb 21 gemäß Fig. 5 ist mit bekannten Mitteln einstellbar durch Drehen des Exzenters mittels einer Stellvorrichtung 52. Um den Betrag dieses Drehwinkels wird dabei die Phase des Schüttelns gegenüber der des Rotierens der Gewichte verschoben. Erneutes Vereinen der zwei Phasen wird später noch beschrieben.

So wie der Hub der Bewegung der Masse, so sind auch die Länge der Hebelarme 5 und die Masse der Gewichte einstellbar. Es können verschiedene Mengen von Gewichtstücken auf dem Hebelarm aufgeladen werden, und ihre Position auf dem Hebelarm ist auch einstellbar. Als Variante ist auch eine Ausführung möglich, bei der der Schwerpunkt von Unwuchtsgewichten bezüglich der Drehachse verschoben werden kann und dadurch die Länge der Hebelarme 5 geändert wird. Eine solche Vorrichtung wird anhand der Beschreibung der Fig. 4,7 und 8 später erklärt.

Beim Beispiel, das in den Fig. 1 und 2 gezeigt ist, ist jedes Gewicht 4 des Paares der Gewichte, bzw. der zugehörige Hebelarm 5 an einer zu der anderen parallelen Welle 16 bzw. 17 befestigt. Die Wellen 16 und 17 sind in den Wänden des Gehäuses 6 drehbar gelagert. Zwischen ihnen ist ein Getriebe mit gleich großen miteinander kämmenden Zahnrädern 18 und 19 vorgesehen, um das Gewicht 4 in Rotation von entgegengesetztem Drehsinn zu versetzen, wie es mit den eingezeichneten Pfeilen angedeutet ist. Das Drehen der Gewichte mit der Frequenz des Schüttelns wird mit einem Kettenantrieb erreicht, der zwischen der Welle 17 mit dem Gewicht und der Welle 13 mit dem Rad 9 der Vorrichtung 8 zum Schütteln der Masse 2 angeordnet ist. Die Übersetzung ist 1/1, so daß die drei Wellen, 13,16 und 17, mit der gleichen Frequenz drehen.

Die Welle 13 mit dem Rad 9 wird von einem nicht gezeichneten Motor angetrieben.

Aus dem Schema ist ersichtlich, daß - wenn sich die Masse in der Mitte ihres Hubweges befindet und wenn keine horizontalen Kräfte von ihr ausgehen - die Gewichte vertikal zueinander gegenüberstehen, wodurch die von ihnen ausgehenden Fliehkräfte gegenseitig kompensiert sind. Nach dem Schub der Masse zum nächsten Wendepunkt, rechts im Bild, wo die horizontale Kraft der Masse nach rechts im Bild wirkt, weisen beide Gewichte 4 in entgegengesetzter Richtung, also hier nach links, wodurch die von der Masse 2 ausgehende Kraft durch die Fliehkraft, die aus den Gewichten wirkt, kompensiert wird. Es folgt in der Phase eine weitere mittige Lage am Hubweg, wo die Gewichte wieder sich senkrecht im Raum gegenüberstehen und die Lage am zweiten Wendepunkt, links im Bild, wo die beiden Gewichte nach rechts weisen, also jeweils in entgegengesetzter Richtung zu der Richtung der Kraft, die die Masse in dem Moment ausübt.

Es ist also erreicht, daß den horizontalen Kräften einer relativ großen Masse 2 mit Mitteln der relativ kleinen Masse der rotierenden Gewichte 4 entgegengewirkt wird. Dazu sind die Hebelarme 5, die Massen der Gewicht 4 entsprechend der Masse 2 und ihrem Hubweg bemessen. Dies ergibt sich aus dem Verhältnis der Länge des Hebelarmes 14 zwischen der Welle 13 des Rades 9 und dem exzentrisch gelagerten Bolzen 10 und der Länge des Hebelarmes 5, an dem die Gewichte 4 befestigt sind, denn die beiden Systeme rotieren bei gleicher Geschwindigkeit, d.h. die Hubbewegungen der Masse 2 und die Rotationsbewegungen der Gewichte haben die gleiche Frequenz. Die Kompensation der Kräfte geschieht deswegen automatisch bei jeder Geschwindigkeit, d.h. bei jeder Frequenz des Schüttelns. Die Länge des Hubweges, d.h. die Exzentrizität des Kurbelantriebs ist einstellbar, der Bolzen 10 am Rad 9 läßt sich mittels einer Einstellschraube 15, Fig. 3, relativ zu der Welle 13 verschieben.

Nach den Ausführungsbeispielen, die in Fig. 3 und 4 dargestellt sind, liegen die Drehpunkte der rotierbaren Gewichte 4 auf einer gemeinsamen Achslinie. An derselben gemeinsamen Achslinie liegen auch das Rad 9 mit dem Bolzen 10 des Kurbelantriebs, bzw. ein Kulissenantrieb 21 der Vorrichtung 8 zum Schütteln der Masse. Weiter ist ein Motor 22 an der Achslinie angeordnet.

In der Ausführung gemäß Fig. 3 ist jedes Gewicht 4 des Paares der Gewichte mit seinem zugehörigen Hebelarm 5 an einem Wellenstück 23 bzw. 24 befestigt, und zwischen den Wellenstücken ist ein Getriebe 25 mit Zahnrädern 26, 26',27, 27' und einer Kette 28 zum Rotieren der Gewichte 4 in dem zueinander entgegengesetzten Drehsinn. Der Antrieb wird hier von einem Motor 22 bestellt, der zu einem der Wellenstücke, hier zu dem Wellenstück 23, angeflanscht ist.

Es ist auch eine nicht gezeichnete Ausführung vorteilhaft, wo die Gewichte an den Wellenstücken befestigt sind und wobei jeder der Wellenstücke mit einem Motor versehen ist. Die Motoren sind synchronisiert und im entgegengesetzten Drehsinn drehbar. Bei diesem System entfällt das Getriebe 25.

Es ist auch die Variante vorteilhaft, bei der das Rad 9 mit dem Bolzen 10 der Vorrichtung zum Schütteln der Masse an einer eigenen Welle befestigt ist, die auch mit einem eigenen Motor antriebbar ist. Die Motoren zum Drehen der Gewichte 4 und der zum Drehen des Rades 9 sind mit gleicher Frequenz drehbar. Eine Phasenverschiebung zwischen der Phase des Drehens der Gewichte und der Phase des Schüttelns läßt sich mit elektrotechnischen Mitteln erreichen.

Bei der Ausführung gemäß Fig. 4 sind im Gehäuse 6 auf einer gemeinsamen Achslinie Drehpunkte von zwei Paaren, also von vier gleich großen Gewichten 4, angeordnet. Die Gewichte 4 bestehen mit Vorteil aus Teilgewichten in Form von Kreissegmenten, wie es in Fig. 8 gezeigt ist. An der gleichen gemeinsamen Achslinie ist auch der Drehpunkt der Vorrichtung 8 zum Schütteln der Masse 2 angeordnet. Die Vorrichtung weist einen Kulissenantrieb 21 auf, der näher in Fig. 5 gezeigt ist, und einen rotierbaren Exzenter 30 aufweist. Der rotierbare Teil der Vorrichtung, der Exzenter 30, ist mittig auf einer Hohlwelle 31 befestigt, und symmetrisch beiderseitig zu dem Exzenter 30 befindet sich jeweils ein Gewicht 4 des ersten Paares der vier Gewichte. Die Schwerpunkte beider Gewichte weisen in die gleiche Richtung. Die Hohlwelle 31 ist rotierbar gelagert auf einer Welle 32, die drehbar im Gehäuse 6 gelagert ist und an die ein Antrieb M angeflanscht ist. An dieser Welle 32 sind die übrigen zwei Gewichte 4 des zweiten Paares befestigt und wieder beiderseitig symmetrisch zu dem Exzenter 30 angeordnet, wobei ihre Schwerpunkte jeweils in die gleiche Richtung weisen. Zwischen der Hohlwelle 31 und der Welle 32 ist ein Getriebe 33 mit Zahnrädern 34 bis 38 und Kettenzügen 39 und 40 vorgesehen zum Rotieren der Hohlwelle 31 und der Welle 32 in zueinander entgegengesetztem Drehsinn.

Es wäre auch ein Differentialgetriebe zwischen den Wellen möglich mit einem Ritzel 51, wie in Fig. 9 gezeigt.

Diese beschriebene Anordnung bringt eine Kompensierung der Zentrifugalkräfte der rotierenden Gewichte, wenn diese in jeweils entgegengesetzter Richtung vertikal wirken, z.B. wenn die Gewichte in der Position sind, die in der Fig. 4 gezeichnet ist. Weiter im Umlauf, wenn die Masse an einem der Wendepunkte ihres Hubes ist, wirken die Zentrifugalkräfte aller vier Gewichte zusammen in der gleichen horizontalen Ebene, den Kräften der schwingenden Masse entgegengesetzt.

Die Hohlwelle 31 ist in drei Abschnitte geteilt. Auf dem mittigen ist der Exzenter 30 des Kulissenantriebs 21 befestigt, wobei an den beiderseits anliegenden Abschnitten jeweils ein Gewicht 4 befestigt ist. Zwischen den Abschnitten ist an beiden Seiten des mittleren Abschnitts je eine Differentialvorrichtung zum Einstellen des Phasenwinkels zwischen dem Schütteln der Masse und dem Rotieren der Gewichte. An den Abschnitten der Hohlwelle 31 ist für jede der Differentialvorrichtungen eine Skala vorgesehen zum Messen der Winkeleinstellung der Abschnitte zu einander.

Ein jedes rotierbare Gewicht 4 weist zwei Teile auf, die mit Vorteil die Form eines Kreissegmentes haben, wie in Fig. 8 zu sehen ist. Die Gewichtsteile sind an einer Scheibe befestigt und mit ihr, wie gemäß Fig. 7, oder an ihr, wie in Fig. 4 gezeigt, entlang einer kreislinienförmigen Bahn relativ zueinander verschiebbar mittels eines Verschiebemechanismus' 43. Damit läßt sich der aus dem Verschieben resultierende Schwerpunkt der Gewichte einstellen, d.h. die Exzentrizität der Gewichte zu der Achse 32. Wie in Fig. 8 dargestellt, wenn die Gewichtsteile gegeneinander stehen, ist der Schwerpunkt in der Mitte, d.h. Exzentrizität ist null. Durch Verschieben der Gewichtsteile zueinander verschiebt sich der Schwerpunkt 56 radial auswärts, bis bei Überlappen der Gewichtsteile, wie in Fig. 7 gezeigt, der Schwerpunkt maximal exzentrisch von der Mitte liegt.

Wie der Fig. 4 entnommen werden kann, ist an der Vorrichtung 21 eine Einstellvorrichtung 52 zugeordnet zum Einstellen des Hubes der Masse 2 durch Drehen des Exzenters 30. Ein Verschiebemechanismus 43 dient dem gleichzeitigen Verstellen des Schwerpunktes 56 der Gewichte in die Lage, die bei dem eingestellten Hub vorteilhaft ist.

Und weiter ist zwischen dem Antrieb des Kulissenantriebs 21 der Schüttelvorrichtung und dem Antrieb zum Rotieren der Gewichte 4 eine Differentialvorrichtung 41 vorgesehen zum gleichzeitigen Ausgleich einer bei dem Einstellen des Hubes entstandenen Phasenverschiebung zwischen der Phase des Rotierens der Gewichte 4 und der des Schüttelns.

**Patentansprüche**

1. Schüttelbock (1) mit einer Vorrichtung (8) zum Versetzen einer Masse (2) in Schwingungen von horizontaler Richtung, wobei zwischen dem Schüttelbock (1) und der schwingenden Masse (2) eine kraftschlüssige Verbindung besteht und wobei die Vorrichtung (8) zum Schütteln der Masse (2) in einem Gehäuse (6) gelagert und mit der Masse (2) kraft- und formschlüssig verbunden ist, eine Vorrichtung (3) zum Kompensieren der von der Masse (2) erzeugten, horizontal wirkenden Massenkraft vorhanden ist, derart daß in dem Gehäuse (6) mindestens ein Paar von gleich großen Gewichten (4) exzentrisch gelagert ist, welche im zueinander entgegengesetzten Drehsinn mit der Frequenz der Zwangsbewegung so drehbar sind, daß ihre Schwerpunkte zum Umkehr-Zeitpunkt der Masse (2) bezüglich der Drehachse in die horizontale entgegengesetzte Richtung zu der in diesem Zeitpunkt zu kompensierenden Massenkraft weisen, dadurch gekennzeichnet, daß an der Vorrichtung (8) zum Schütteln der Masse (2) der Hub einstellbar ist, wobei die Gewichte (4) exzentrisch über einem Hebelarm (5) rotierbar gelagert sind und der Hub der Masse (2), wie auch die Länge des Hebelarmes (5), d.h. die Exzentrizität der Gewichte (4) und ihre Masse einstellbar sind, und daß Exzentrizität und Masse der Gewichte (4) so bemessen werden, daß ihre beim Drehen wirkenden Fliehkräfte die von der eindimensional hin- und herbewegten Masse (2) herrührende horizontale Kraft im wesentlichen kompensieren.

2. Verwendung eines Schüttelbocks gemäß Anspruch 1 bei einer Papiermaschine (7) mit mindestens einem umlaufenden von Walzen geführten Sieb zur Aufnahme einer Papierbahn, wobei der Schüttelbock eine oder eine Anzahl von Walzen (2) der Papiermaschine (7) in eine hin- und hergehende Bewegung versetzt, dadurch gekennzeichnet, daß der Schüttelbock (1) gemäß Anspruch 1 zum Kompensieren der horizontalen Kräfte, die von der erzeugten hin- und hergehenden Bewegung herrühren, ausgeführt ist (Fig. 6).

3. Schüttelbock nach Anspruch 1, dadurch gekennzeichnet, daß die Vorrichtung (8) zum Schütteln einen rotierbaren Hebelarm (14) eines die Masse (2) bewegenden Kurbelantriebs aufweist, über welchen die kraftschlüssige Verbindung zwischen der Masse (2) und dem Gehäuse (6) hergestellt ist.

4. Schüttelbock nach Anspruch 1, dadurch gekennzeichnet, daß in dem Gehäuse (6) ein Kulissenantrieb (21) zum Schütteln der Masse (2) gelagert ist, dessen Hub einstellbar ist.

5. Schüttelbock nach Anspruch 1, dadurch gekennzeichnet, daß eine Vorrichtung (41) (Fig.4) vorgesehen ist zum Gleichstellen der Phase des Schüttelns und der Phase des Rotierens der Gewichte (4).

6. Schüttelbock nach Anspruch 1, dadurch gekennzeichnet, daß jedes der Gewichte (4) an einer zu der anderen parallelen Welle (16 und 17) befestigt ist, wobei zwischen den Wellen (16 und 17) ein Getriebe (18,19) vorgesehen ist zum Rotieren der Gewichte (4) in dem zueinander entgegengesetzten Drehsinn.

7. Schüttelbock nach Anspruch 1, dadurch gekennzeichnet, daß die Drehpunkte der rotierbaren Gewichte (4) auf einer gemeinsamen Achslinie liegen (Fig. 3 und 4).

8. Schüttelbock nach Anspruch 7, dadurch gekennzeichnet, daß jedes Gewicht des Paares der Gewichte (4) an einem Wellenstück (23,24) befestigt ist und daß zwischen den Wellenstücken (23,24) ein Getriebe (25) vorgesehen ist zum Rotieren der Gewichte (4) in dem zueinander entgegengesetzten Drehsinn (Fig. 3).

9. Schüttelbock nach Anspruch 7, dadurch gekennzeichnet, daß an derselben Achslinie auch ein Antriebsmotor (22) zum Rotieren der Gewichte (4) angeordnet ist.

10. Schüttelbock nach Anspruch 7, dadurch gekennzeichnet, daß jedes der Gewichte (4) auf einem mindestens an zwei Stellen gelagerten Wellenstück befestigt ist, der jeweils mit einem Motor angetrieben ist, wobei die Motore zueinander synchronisiert und mit der Frequenz des Schwingens in entsprechendem Drehsinn drehbar sind.

11. Schüttelbock nach Anspruch 1, dadurch gekennzeichnet, daß das rotierbare Gewicht (4) aus mindestens zwei zueinander entlang einer kreislinienförmigen Bahn verschiebbar einstellbaren Teilgewichten besteht und daß dazu ein Verschiebemechanismus (43) eingreift, wodurch die Lage des gemeinsamen Schwerpunktes der Teilgewichte einstellbar ist.

12. Schüttelbock nach Anspruch 4,5, und 11, dadurch gekennzeichnet, daß an dem Kulissenantrieb (21) eine Einstellvorrichtung (52) zum Einstellen des Hubes der Masse (2) angeordnet ist und daß ein Verschiebemechanismus (43) zum mit der Hubeinstellung gleichzeitigen Einstellen der bei dem eingestellten Hub vorgesehenen Lage des Schwerpunktes an den Gewichten (4) vorhanden ist.

13. Schüttelbock nach Anspruch 12, dadurch gekennzeichnet, daß zwischen dem Antrieb des Kulissenantriebs (21) und dem Antrieb zum Rotieren der Gewichte (4) eine Differentialvorrichtung (41) eingerichtet ist zum mit der Hubeinstellung gleichzeitigen Ausgleich einer bei der Einstellung des Hubes entstandenen Phasenverschiebung zwischen der Phase des Schüttelns und der Phase des Rotierens der Gewichte (4).

14. Schüttelbock nach Anspruch 1, dadurch gekennzeichnet, daß in dem Gehäuse auf einer gemeinsamen Achslinie Drehpunkte von vier gleich großen Gewichten (4, Fig. 4) und der Vorrichtung (21) zum Schütteln der Masse (2) angeordnet sind, wobei der zu rotierende Teil (30) der Vorrichtung (21) und symmetrisch beiderseitig zu ihm zwei von den Gewichten (4) in gleiche Richtung weisend auf einer Hohlwelle (31) befestigt sind, welche auf einer Welle (32) gelagert ist, auf welcher die übrigen zwei Gewichte (4) symmetrisch beiderseitig zu dem Teil (30) der Vorrichtung und in gleiche Richtung weisend befestigt sind, wobei ein Getriebe (33) vorgesehen ist zum Erzielen des Rotierens der Hohlwelle (31) und der Welle (32) in zueinander entgegengesetztem Drehsinn.

15. Schüttelbock nach Anspruch 14, dadurch gekennzeichnet, daß die Hohlwelle (31) in drei Abschnitte geteilt ist und daß auf dem mittleren Teil der rotierbare Teil (30) der Vorrichtung (21) befestigt ist und an den beiderseits anliegenden Abschnitten je ein Gewicht (4) befestigt ist, wobei zwischen den Abschnitten beiderseits des Teiles (30) eine Differentialvorrichtung (41) vorgesehen ist zum Ausgleich einer Phasenverschiebung zwischen dem Schütteln der Masse (2) und dem Rotieren der Gewichte (4), nach Einstellen des Schüttelhubes am Kulissenantrieb (21) durch Drehen des Exzenters (30) mittels einer Stellvorrichtung (52).

16. Schüttelbock nach Anspruch 14, dadurch gekennzeichnet, daß zwischen der Hohlwelle (31) und der Welle (32) ein Differentialgetriebe (Fig. 9) vorgesehen ist zum Erzielen eines zueinander entgegengesetzten Drehsinnes zwischen der Hohlwelle (31) und der Welle (32).

## Claims

1. A shaking mechanism (1) with a devise (8) for displacing a mass (2) in horizontal oscillations, a non-positive connection being located between the shaking mechanism (1) and the oscillating mass (2) and the device (B) for shaking the mass (2) being mounted in a housing (6) and being connected with the mass (2) in non-positive and positive manner, a device (3) for compensating the horizontally acting inertia force generated by the mass (2) being present, in such a manner that at least one pair of weights (4) of equal size is mounted eccentrically in the housing (6), which weights are rotatable in opposing directions of rotation at the frequency of the forced motion in such a manner that their centres of gravity at the moment of reversal of the mass (2) with respect to the axis of rotation point in the opposite horizontal direction to the inertia force to be compensated at this moment, characterised in that the stroke is adjustable on the device (8) for shaking the mass (2), the weights (4) being mounted rotatably and eccentrically via a lever arm (5) and the stroke of the mass (2), and also the length of the lever arm (5), i.e. the eccentricity of the weights (4) and their mass being adjustable, and that the eccentricity and mass of the weights (4) are calculated such that their centrifugal forces which act upon rotation substantially compensate for the horizontal force originating from the oscillating mass (2) which is moved one-dimensionally back and forth.

2. Use of a shaking mechanism according to Claim 1 in a paper-making machine (7) having at least one rotating screen, guided by rollers, for receiving a paper web, the shaking mechanism displacing one roller or a number of rollers (2) of the paper-making machine (7) in a back-and-forth motion, characterised in that the shaking mechanism (1) according to Claim 1 is designed for compensating the horizontal forces which originate from the back-and-forth motion produced (Fig. 6).

3. A shaking mechanism according to Claim 1, characterised in that the device (8) for shaking has a rotatable lever arm (14) of a crank drive moving the mass (2), by means of which drive the non-positive connection between the mass (2) and the housing (6) is produced.

4. A shaking mechanism according to Claim 1, characterised in that a sliding drive (21) for shaking the mass (2), the stroke of which drive is adjustable, is mounted in the housing (6).

5. A shaking mechanism according to Claim 1, characterised in that a device (41) (Fig. 4) is provided for coordinating the phase of shaking and the phase of rotating of the weights (4).

6. A shaking mechanism according to Claim 1, characterised in that each of the weights (4) is attached to a shaft (16 and 17) which is parallel to the other one, with gearing (18, 19) being provided between the shafts (16 and 17) for rotating the weights (4) in the opposing directions of rotation.

7. A shaking mechanism according to Claim 1, characterised in that the pivots of the rotatable weights (4) lie on a common axis line (Figs. 3 and 4).

8. A shaking mechanism according to Claim 7, characterised in that each weight of the pair of weights (4) is attached to a shaft piece (23, 24) and that gearing (25) is provided between the shaft pieces (23. 24) for rotating the weights (4) in the opposing directions of rotation (Fig. 3).

9. A shaking mechanism according to Claim 7, characterised in that a drive motor (22) for rotating the weights (4) is also located on the same axis line.

10. A shaking mechanism according to Claim 7, characterised in that each of the weights (4) is attached to a shaft piece which is mounted at least at two points, which piece is driven by a motor in each case, the motors being synchronised relative to each other and being rotatable with the frequency of the oscillation in the corresponding direction of rotation.

11. A shaking mechanism according to Claim 1, characterised in that the rotatable weight (4) consists of at least two partial weights which are adjustable for displacement relative to each other along a circular line-shaped path and that in addition a displacement mechanism (43) intervenes, by means of which the position of the common centre of gravity of the partial weights is adjustable.

12. A shaking mechanism according to Claims 4, 5 and 11, characterised in that a setting device (52) for setting the stroke of the mass (2) is located on the sliding drive (21) and that a displacement mechanism (43) for setting, simultaneously with the setting of the stroke, the position of the centre of gravity provided for the stroke set is present on the weights (4).

13. A shaking mechanism according to Claim 12, characterised in that a differential device (41) is arranged between the drive of the sliding drive (21) and the drive for rotating the weights (4), for the compensation, simultaneously with the setting of the stroke, of a phase displacement between the phase of shaking and the phase of rotating of the weights (4) which has occurred upon setting the stroke.

14. A shaking mechanism according to Claim 1, characterised in that pivots of four weights (4, Fig. 4) of equal size and of the device (21) for shaking the mass (2) are located in the housing on a common axis line, with the part (30) of the device (21) which is to be rotated and symmetrically on both sides of it two of the weights (4) being attached, pointing in the same direction, to a hollow shaft (31) which is mounted on a shaft (32) on which the other two weights (4) are attached symmetrically on both sides of the part (30) of the device and pointing in the same direction, with gearing (33) being provided to obtain the rotation of the hollow shaft (31) and the shaft (32) in opposing directions of rotation.

15. A shaking mechanism according to Claim 14, characterised in that the hollow shaft (31) is divided into three sections and that the rotatable part (30) of the device (21) is attached to the central part and one weight (4) each is attached to the sections lying on either side, with a differential device (41) being provided between the sections on either side of the part (30) to compensate for a phase displacement between the shaking of the mass (2) and the rotating of the weights (4), after setting the shaking stroke on the sliding drive (21) by turning the eccentric (30) by means of a setting device (52).

16. A shaking mechanism according to Claim 14, characterised in that a differential gear (Fig. 9) is provided between the hollow shaft (31) and the shaft (32) to achieve an opposing direction of rotation between the hollow shaft (31) and the shaft (32).

**Revendications**

1. Support vibrateur (1) avec un dispositif (8) pour mettre une masse (2) en oscillations de sens horizontal, dans lequel il existe entre le montage vibrateur (1) et la masse oscillante (2) une liaison à transmission de force, le dispositif (8) pour faire osciller la masse (2) étant monté dans un boîtier (6) et relié à la masse (2) avec transmission de force et avec liaison structurelle, un dispositif (3) étant prévu pour compenser la force massique engendrée par la masse (2) et agissant horizontalement, de telle manière qu'est montée excentriquement dans le boîtier (6) au moins une paire de poids (4) de même grandeur, pouvant être entraînés en rotation dans des sens opposés, à la fréquence du mouvement imposé, de telle manière que leurs centres de gravité sont dirigés à l'instant de l'inversion du mouvement de la masse (2) par rapport à l'axe de rotation dans le sens horizontal opposé à la force massique à compenser à cet instant,
**caractérisé** en ce que la course du dispositif (8) pour faire vibrer la masse (2), est réglable, les poids (4) étant montés rotatifs excentriquement par l'intermédiaire d'un bras de levier (5), la course de la masse (2) ainsi que la longueur du bras de levier (5), c'est à dire l'excentricité des poids (4) et leur masse étant réglables, et en ce que l'excentricité et la masse des poids (4) sont déterminées de telle sorte que leurs forces centrifuges agissant lors de leur rotation compensent, pour l'essentiel, la force horizontale résultant du mouvement de va-et-vient unidimensionnel de la masse (2).

2. Utilisation d'un support vibrateur selon la revendication 1 à une machine à papier (7) avec au moins un tamis guidé en rotation par des cylindres pour recevoir une laize de papier, dans laquelle le support vibrateur anime un ou plusieurs des cylindres (2) de la machine à papier (7) avec un mouvement de va-et-vient, **caractérisé** en ce que le support vibrateur (1) selon la revendication 1 est réalisé pour compenser les forces horizontales qui résultent du mouvement de va-et-vient engendré (Fig.6).

3. Support vibrateur selon la revendication 1, caractérisé en ce que le dispositif vibrateur (8) présente un bras de levier rotatif (14) faisant partie d'une transmission à manivelle qui met en mouvement la masse (2), par l'intermédiaire de laquelle est réalisée la liaison avec transmission de force entre la masse (2) et le boîtier (6).

4. Support vibrateur selon la revendication 1, caractérisé en ce qu'un mécanisme d'entraînement à coulisse (21) à course réglable est monté dans le boîtier (6), pour faire vibrer la masse (2).

5. Support vibrateur selon la revendication 1, caractérisé en ce qu'il est prévu un dispositif (41) (Figure 4) pour faire concorder la phase de vibration et la phase de la rotation des poids (4).

6. Support vibrateur selon la revendication 1, caractérisé en ce que chacun des poids (4) est attaché à un arbre (16 et 17) parallèle à l'autre, une transmission à engrenages (18, 19) étant prévue entre les arbres (16 et 17) pour entraîner les poids (4) dans des sens de rotation opposés entre eux.

7. Support vibrateur selon la revendication 1, caractérisé en ce que les centres de rotation des poids rotatifs (4) sont situés sur une ligne d'axe commune (Figures 3 et 4).

8. Support vibrateur selon la revendication 7, caractérisé en ce que chaque poids de la paire de poids (4) est attaché à un tronçon d'arbre (23, 24) et en ce qu'une transmission à engrenages (25) est prévue entre les tronçons d'arbres (23, 24) pour faire tourner les poids (4) dans des sens de rotation opposés l'un à l'autre (Figure 3).

9. Support vibrateur selon la revendication 7, caractérisé en ce qu'un moteur (22) pour entraîner les poids (4) en rotation est également disposé sur la même ligne d'axe.

10. Support vibrateur selon la revendication 7, caractérisé en ce que chacun des poids (4) est attaché à un tronçon d'arbre supporté par des paliers en au moins deux endroits, qui est chaque fois entraîné par un moteur, les moteurs étant synchronisés l'un avec l'autre et pouvant tourner à la fréquence de vibration dans le sens de rotation approprié.

11. Support vibrateur selon la revendication 1, caractérisé en ce que le poids rotatif (4) est constitué d'au moins deux poids partiels réglables de manière décalable, l'un par rapport à l'autre, le long d'un trajet en arc de cercle, et qu'à cet effet agit un mécanisme de manoeuvre (43) au moyen duquel la position du centre de gravité commun des poids partiels est réglable.

12. Support vibrateur selon les revendications 4, 5, et 11, caractérisé en ce qu'un dispositif de réglage (52) pour le réglage de la course de la masse (2) est disposé sur la transmission à coulisse (21) et en ce qu'un mécanisme de manoeuvre (43) est prévu pour le réglage, simultané avec le réglage de la course, de la position prévue du centre de gravité des poids (4) correspondant au réglage de la course.

13. Support vibrateur selon la revendication 12, caractérisé en ce qu'un dispositifdifférentiel (41) est disposé entre l'entraînement de la transmission à coulisse (21) et l'entraînement pour la rotation des poids (4) pour la compensation, simultanée avec le réglage de la course, d'un déphasage apparaissant lors du réglage de la course entre la phase de la vibration et la phase de la rotation des poids (4).

14. Support vibrateur selon la revendication 1, caractérisé en ce que les centres de rotation de quatre poids (4, Figure 4) de même grandeur, et celui du dispositif (21) pour faire vibrer la masse (2) sont disposés dans le boîtier sur une ligne d'axe commune, la partie (30) du dispositif (21) destinée à être entraînée en rotation, et deux des poids (4) dirigés dans le même sens, symétriquement de part et d'autre de ladite partie (30) sont fixés sur un arbre creux (31) monté sur un arbre (32) sur lequel sont fixés les deux autres poids (4) symétriquement de part et d'autre de la partie (30) du dispositif et en étant dirigés dans le même sens, une transmission (33) étant prévue pour produire la rotation de l'arbre creux (31) et de l'arbre (32) dans des sens de rotation opposés l'un à l'autre.

15. Support vibrateur selon la revendication 14, caractérisé en ce que l'arbre creux (31) est divisé en trois sections, et en ce que la partie rotative (30) du dispositif (21) est fixée sur la section médiane et en ce qu'un poids (4) est fixé sur chacune des sections situées de part et d'autre, un dispositif différentiel (41) étant prévu entre les sections situées de part et d'autre de la partie (30) pour compenser un déphasage entre la vibration de la masse (2) et la rotation des poids (4), après réglage de la course de vibration sur la transmission à coulisse (21) en faisant tourner l'excentrique (30) au moyen d'un dispositif de réglage (52).

16. Support vibrateur selon la revendication 14, caractérisé en ce qu'une transmission différentielle (Figure 9) est prévue entre l'arbre creux (31) et l'arbre (32) pour obtenir un sens de rotation opposé entre l'arbre creux (31) et l'arbre (32).

EP 0 303 799 B1

FIG. 1

FIG. 2

FIG.6

FIG. 3

10

FIG. 4

FIG. 5

FIG.9

FIG. 7

FIG.8